**Europäisches Patentamt**

**European Patent Office**

**Office européen des brevets**

(19)

(11) Veröffentlichungsnummer: **0 508 548 A2**

## EUROPÄISCHE PATENTANMELDUNG

(12)

(21) Anmeldenummer: **92201062.4**

(22) Anmeldetag: **03.04.92**

(51) Int. Cl.5: **G01N 21/90, G01B 11/24**

(30) Priorität: **06.04.91 DE 4111145**

(43) Veröffentlichungstag der Anmeldung:
**14.10.92 Patentblatt 92/42**

(84) Benannte Vertragsstaaten:
**PT**

(71) Anmelder: **Schott Glaswerke**
**Hattenbergstrasse 10**
**W-6500 Mainz 1(DE)**

(72) Erfinder: **Dassler, Hans-Ulrich**

**Mittenheimerstr. 6**
**W-8042 Oberschleissheim(DE)**
Erfinder: **Haas, Rüdiger**
**Weidenstr. 9**
**W-8011 Faistenhaar(DE)**
Erfinder: **Lang, Johann**
**Effnerstr. 8**
**W-8042 Oberschleissheim(DE)**

(74) Vertreter: **Konle, Tilmar, Dipl.-Ing. et al**
**Benderstrasse 23 a**
**W-8000 München 60(DE)**

(54) **Verfahren zum Überprüfen medizinischer Ampullen auf Masshaltigkeit.**

(57) Zum vollautomatischen Überprüfen medizinischer Ampullen auf Maßhaltigkeit werden die Ampullen in horizonzaler Lage auf einem Kettenförderer taktweise durch eine optoelektronische Prüfstation hindurchbewegt. Für den Prüfvorgang wird dann die Ampulle aus dem Kettenförderer ausgehoben und von einer diffus strahlenden Beleuchtungsquelle senkrecht zu ihrer Längsachse im Durchlicht beleuchtet. Im Falle von OPC-Ampullen wird die Ampulle beim Prüfvorgang um ihre Längsachse gedreht. Das durch die Ampulle hindurchtretende Licht wird auf den opto-elektronischen Wandler (Fotodiodenzeile) eines Kamerasystems abgebildet, welcher die Abbildungen in elektrische Bildsignale umwandelt. Diese Bildsignale werden hinsichtlich ihrer Intensitätsveränderungen, die von der geprüften Ampulle hervorgerufen werden, dahingehend ausgewertet, daß Meßwerte für die gewünschten Ampullenmaße sowie gegebenenfalls für deren Abweichungen von normieretn Ampullenmaßen erzeugt werden.

Fig.3

Die Erfindung bezieht sich auf ein Verfahren gemäß dem Oberbegriff des Patentanspruchs 1.

Bei medizinischen Ampullen werden an die Maßhaltigkeit hohe Forderungen gestellt, da beim Abfüllen der Ampullen die Füllmenge nicht gemessen wird, sondern davon ausgegangen wird, daß bei der Befüllung bis zu einer vorgegebenen Füllmarke exakt das gewünschte Füllvolumen erzielt wird. Bei den im allgemeinen relativ Kleinen Füllmengen bewirken bereits geringe Maßschwankungen relativ große Füllmengenänderungen, was zu einer entsprechend großen Schwankung der pharmakologisch wirksamen Dosis bei der Verabreichung der in den Ampullen abgepackten Medikamente führt.

Die Aufgabe der Erfindung besteht darin, die Maßhaltigkeit medizinischer Ampullen automatisch und berührungsfrei zu überprufen.

Diese Aufgabe wird erfindungsgemäß durch die kennzeichnenden Merkmale des Patentanspruchs 1 gelöst.

Vorteilhafte Ausgestaltungen und Weiterbildungen des erfindungsgemäßen Verfahrens ergeben sich aus den Unteransprüchen.

Die Erfindung beruht auf der Überlegung, jede einzelne, produzierte Ampulle auf optoelektronischem Wege abzutasten und die Abtastwerte digital auszuwerten. In Abhängigkeit von der festgestellten Maßhaltigkeit können bei einer Überschreitung eines festgelegten Toleranzbereiches die betreffenden Ampullen gezielt und ohne Produktionsunterbrechung ausgesondert werden, so daß die Ausschußproduktion genau erfaßbar ist. Darüberhinaus gestattet die praktisch verzögerungsfreie Überprüfung sämtlicher Ampullen im Falle festgestellter Toleranzüberschreitungen den sofortigen Eingriff bei den Werkzeugen zum Herstellen der medizinischen Ampullen, wodurch eine Ausschußproduktion sehr rasch erkannt und abgestellt werden kann. Mit Hilfe der digitalen Auswertung ist es ferner möglich, von sämtlichen Ampullen jeder Produktionscharge ein vollständiges Meßprotokoll zu erstellen, das als Qualitätsnachweis gegenüber den Abnehmern der Ampullen dient. Ferner läßt sich die Genauigkeit der Herstellungswerkzeuge und ihre Standzeit ebenfalls anhand von erstellten Meßprotokollen überprüfen.

Die Erfindung wird nachfolgend anhand der in den Zeichnungen dargestellten Ausführungsbeispiele näher erläutert. Es zeigt:

Figur 1a    Eine Ansicht einer sogenannten One-Point-Cut-(OPC)-Ampulle im unbefüllten Zustand, bei welcher die achssymetrische Lage eines Farbmarkierungspunktes sowie die Lage eines als Sollbruchstelle dienenden Ritzes relativ zu dem Farbmarkierungspunkt gesonderte Prüfparameter neben den Konturmaßen der Ampulle darstellen;

Figur 1b    eine Detailansicht der OPC-Ampulle gemäß Figur 1a im Bereich des Farbmarkierungspunktes;

Fig. 2a - 2c    Ansichten verschieden geformter Ampullen gemäß DIN 58 377 zur Veranschaulichung der zu überprüfenden Konturmaße;

Figur 3    eine schematische Ansicht einer aus zwei Prüfstationen bestehenden Einrichtung zur Durchführung des erfindungsgemäßen Verfahrens;

Figur 4    eine Frontansicht einer Prüfstation zur Kontur-Kontrolle, die bei der Prüfeinrichtung gemäß Figur 3 vorgesehen ist;

Figur 5    eine Seitenansicht der Prüfstation gemäß Figur 4;

Figur 6    eine Frontansicht einer weiteren Prüfstation zur Kontrolle des Farbmarkierungspunktes und des Ritzes von OPC-Ampullen, die bei der Einrichtung gemäß Figur 3 vorgesehen ist;

Figur 7    eine Frontansicht eines bei der Prüfstation gemäß Figur 6 vorgesehenen Aushebers;

Figur 8    eine Seitenansicht des Aushebers gemäß Figur 7;

Figur 9    eine Draufsicht auf den Ausheber gemäß Figuren 7 und 8.

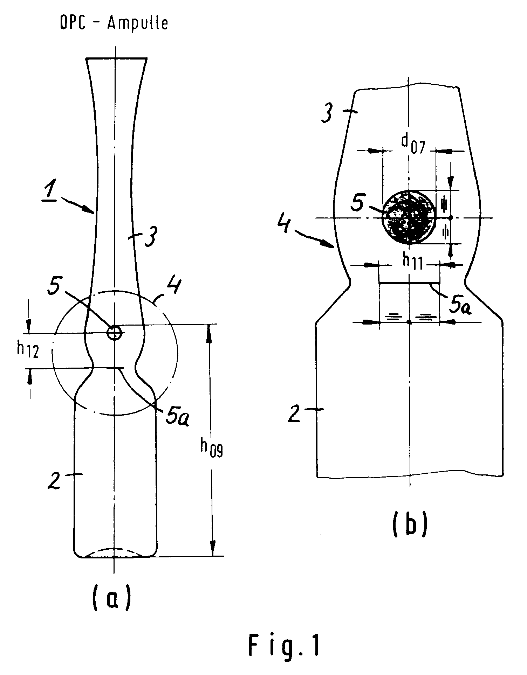

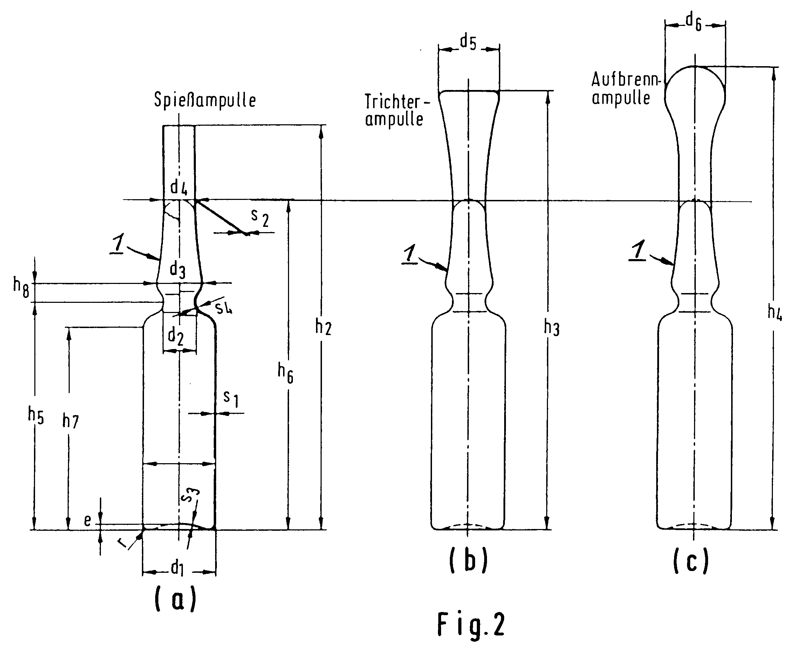

Mit dem erfindungsgemäßen Verfahren werden medizinische Ampullen auf Maßhaltigkeit überprüft, die zum besseren Verständnis in den Figuren 1 und 2 anhand verschiedener Formen und Ausführungen dargestellt sind. Bei der Ampulle 1 gemäß Figur 1 handelt es sich um eine sogenannte One-Point-Cut-(OPC)-Ampulle, welche aus einem zylindrischen Rumpf 2 und einem schlankeren Halsabschnitt (Spieß, Trichter) 3 besteht. Der Übergangsbereich (Zwiebel) 4 zwischen dem Rumpf 2 und dem Halsabschnitt 3 zeigt die für sämtliche medizinische Ampullen charakteristische Einschnürung, da bei der Ingebrauchnahme der befüllten Ampulle am Übergangsbereich 4 der Halsabschnitt 3 abgebrochen wird. Zum Abbrechen des Halsabschnittes 3 wird bei den in Figuren 2a bis 2c dargestellten Arten von Ampullen 1 mit einer Feile am Übergangsbereich 4 ein Ritz angebracht, worauf dann der als relativ langer Hebelarm wirkende Halsabschnitt 3 gegen den Rumpf 2 geknickt wird. Bei der OPC-Ampulle gemäß Figur 1 ist ein derartiger Ritz als Sollbruchstelle 5a herstellungsseitig bereits vorhanden, so daß dieser Ampullentyp ohne vorheriges Feilen gebrauchsfertig ist. Da die maschinell hergestellte Sollbruchstelle 5a im befüllten Zustand der Ampulle 1 mit bloßem Auge schwer erkennbar ist, weist die OPC-Ampulle gemäß Figur 1 oberhalb der Sollbruchstelle 5a eine Farbpunktmarkierung 5 auf welche, wie Figur 1b zeigt, exakt auf die Ampullen-Längsachse zentriert ist, einen festgelegten Durchmesser, eine festgelegte Höhe bezüglich des Ampullenbodens sowie einen festgelegten axialen Abstand von der Sollbruchstelle 5a aufweist. Auch die Sollbruchstelle 5a ist bezüglich der Ampullen-Längsachse mittig angebracht und weist eine definierte Länge auf. Alle diese Merkmale sind genormt und müssen bei der Überprüfung einer OPC-Ampulle neben deren Kontur auf Maßhaltigkeit erfaßt werden. Gleiches gilt auch für die übrigen Ampullenmaße, die in Figur 2 im einzelnen angegeben sind und der DIN-Norm DIN 58 377 entsprechen. Bei der Ampulle 1 gemäß Fig. 2a handelt es sich um eine sogenannte Spießampulle, bei der Ampulle gemäß Fig. 2b um eine sogenannte Trichterampulle und bei der Ampulle gemäß Fig. 2c um eine sogenannte Aufbrennampulle.

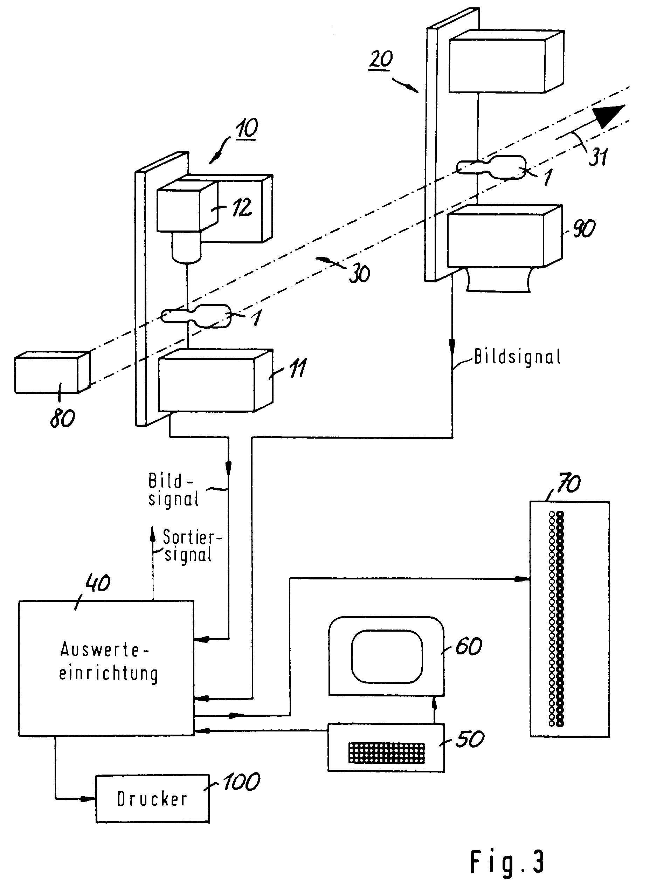

Die in Figur 1 dargestellten, besonderen Merkmale (Farbpunkt, Ritz und Einschnürung = Brechring) einer OPC-Ampulle werden hinsichtlich ihrer Geometrie mit Hilfe der opto-elektronischen Prüfstation 10 für jede produzierte Ampulle berührungsfrei vermessen, während die Konturmaße der verschiedenen, in Fig. 2 gezeigten Ampullenformen durch eine automatische Konturkontrolle mit Hilfe der optoelektronischen Prüfstation 20 (Figur 3) erfaßt werden. Die Konturkontrolle ermöglicht ferner eine Überprüfung auf vorhandene Splitter. Die in Figur 3 veranschaulichte Einrichtung zur Durchführung des erfindungsgemäßen Verfahrens weist zur Beschickung der beiden Prüfstationen 10 und 20 einen Kettenförderer 30 auf, auf welchen die Ampullen 1 in waagrechter bzw. horizontaler Lage aufliegen und in Richtung des Pfeils 31 durch die Prüfstationen 10 und 20 hindurchbewegt werden.

Jede Prüfstation erzeugt für jede einzelne Ampulle 1 ein elektrisches Bildsignal, welches einer Auswerteeinrichtung 40 zugeführt wird. Der Auswerteeinrichtung 40 werden ferner über ein Terminal, bestehend aus einer Tastatur 50 und einem Monitor 60, Sollwertdaten über die Abmessungen der in den Prüfstationen 10 und 20 überprüften Ampullen zugeführt. Die Auswerteeinrichtung 40 ermittelt aus den zugeführten Bildsignalen die verschiedenen Ampullenabmessungen gemäß Fign. 1 und 2, vergleicht die ermittelten Abmessungen mit den eingegebenen Sollwerten und erstellt für jede überprüfte Ampulle ein Meßprotokoll, welches über einen Drucker 100 ausgedruckt wird. Ferner steuert die Auswerteeinrichtung eine Anzeigetafel 70, wo für jeden einzelnen Prüfparameter eine rote und eine grüne Signallampe vorgesehen ist. Solange der Meßwert eines betreffenden Parameters im Toleranzbereich liegt, leuchtet die grüne Lampe, während bei einer Toleranzbereichsüberschreitung die rote Lampe des betreffenden Parameters auf der Anzeigetafel aufleuchtet. Auf diese Weise kann das Bedienpersonal mit einem Blick ablesen, ob und gegebenenfalls welche Parameter außerhalb der Norm sind. Ein weiterer Ausgang 41 der Auswerteeinrichtung 40 wird mit einem Sortiersignal beaufschlagt, falls die Auswerteeinrichtung 40 feststellt, daß eine überprüfte Ampulle unbrauchbar ist. Das Sortiersignal löst bei einer nicht dargestellten Sortierrvorrichtung eine Entfernung der betreffenden Ampulle aus dem Kettenförderer 30 aus. Auf diese Weise läßt sich Ausschußware gezielt aus der Produktion herausnehmen. Die Herausnahme einer Ampulle wird in dem Meßprotokoll vermerkt.

Die opto-elektronische Prüfstation 10 zur Kontrolle von OPC-Ampullen gemäß Figur 1 umfaßt, wie Figur 3 weiter zeigt, eine diffus strahlende Beleuchtungsquelle 11, welche unterhalb des Kettenförderers 30 angeordnet ist. Die in horizontaler Lage durch den diffusen Strahlengang der Beleuchtungsquelle 11 hindurchbewegte Ampulle 1 erzeugt auf Grund ihrer Transparenzvariationen eine Helligkeits- bzw. Intensitätsmodulation des durch ihren Glaskörper hindurchtretenden, diffusen Lichtes, wobei diese Helligkeits- bzw. Intensitätsmodulation eine optische Information darstellt. Die Transparenzvariationen werden durch die Farbpunktmarkierung 5, die als Ritz ausgeführte Sollbruchstelle 5a sowie durch den nicht dargestellten Brechring hervorgerufen. Dabei ist wesentlich, daß die diffusen Lichtstrahlen der Beleuchtungsquelle 11 senkrecht zur Längsachse der Ampulle 1 verlaufen, um Verzerrungen und damit Meßfehler zu vermeiden.

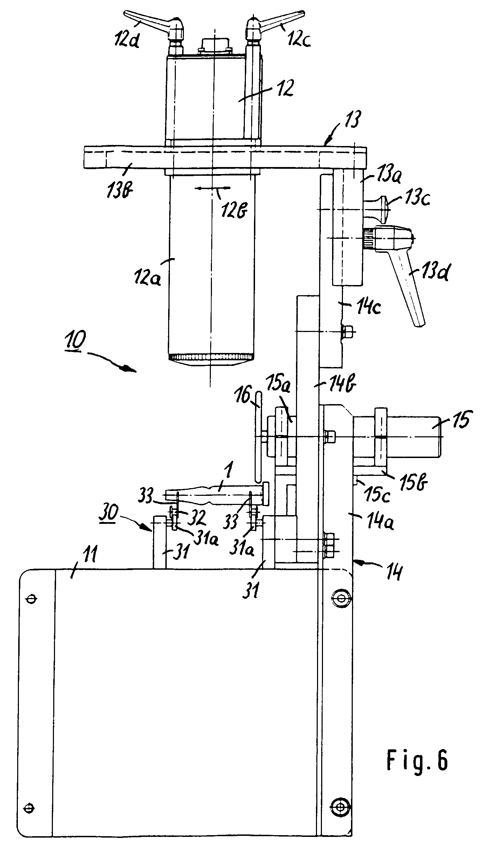

Die durch den Glaskörper der Ampulle 1 hindurchgetretenen, modulierten Strahlen fallen unmittelbar, d.h., ohne jede Umlenkung, in den Strahlengang eines Kamerasystems 12, welches im wesentlichen eine Optik 12a sowie eine Fotodiodenzeile als opto-elektronischen Bildwandler enthält. Derartige Fotodiodenkameras haben den Vorteil einer hohen Auflösung und einer exakten räumlichzeitlichen Beziehung zwischen der Lage jeder Fotodiode innerhalb der Zeile und den von den einzelnen Fotodioden herrührenden Intensitätsimpulsen innerhalb des Bildsignals. Um wiederum Abbildungsfehler zu vermeiden, ist die Fotodiodenzeile exakt parallel zur Längsachse der Ampulle 1 bzw. exakt senkrecht zu dem Strahlengang des durch die Ampulle 1 hindurchtretenden Lichtes orientiert. Da die Fotodiodenzeile momentan nur eine Abbildung eines schmalen Oberflächenstreifens der Ampulle 1 parallel zu der Längsachse liefert, ist es zur Erfassung der Farbpunktmarkierung 5 und der ebenfalls nur über einen kleinen Teil des Ampullenumfangs vorhandenen Sollbruchstelle 5a erforderlich, eine Abwicklung der gesamten Ampullen-Oberfläche zu erzeugen. Hierzu wird die Ampulle 1 mit Hilfe eines in Figur 6 näher dargestellten Reibrades 16 während ihrer Beleuchtung um 360° um ihre Längsachse gedreht, wobei die von der Fotodiodenkamera 12 aufgenommene Folge von Oberflächenstreifen von der Auswerteeinrichtung 40 zu einer Abwicklung der Oberfläche zusammengesetzt wird. Die vollständige Drehung der Ampulle 1 um ihre Längsachse wird durch den ohnehin vorhandenen Taktbetrieb des Kettenförderers 30 ermöglicht. Dabei hebt in jeder Stillstandsphase des Kettenförderers 30 ein in der Prüfstation 10 vorhandener Ausheber 80 die Ampulle 1 aus ihrer Lagerung auf dem Kettenförderer 30 zu dem Reibrad 16 hin in Richtung Fotodiodenkamera 12 aus, und zwar so lange, bis die Ampulle 1 einmal um ihre Längsachse gedreht ist. Anschließend legt der Ausheber 80 die geprüfte Ampulle 1 wieder in ihre Lagerung auf dem Kettenföderer 30 zurück, worauf der Kettenförderer 30 den nächsten Arbeitstakt ausführt und die nächste Ampulle 1 in die Prüfstation 10 befördert.

Bei einem Prototypen der Prüfstation 10 betrug bei einem Hub von 10 mm und einer Hubgeschwindigkeit von etwa 200 mm/s die Aushebezeit etwa 100 mm/s nach Kettenstop, während die Absenkzeit ebenfalls etwa 100 mm/s betrug. Die Fotodiodenkamera 12 wies einen Meßbereich von 20 mm bei einer Auflösung von 0,01 mm auf. Pro Sekunde konnten 1400 Meßwerte erfaßt werden. Die radiale Auflösung betrug 0,05 mm. Als Beleuchtungsquelle 11 wurde eine Quecksilberdampf-Hochdrucklampe mit einer Leistung von 150 Watt und einer Leuchtfläche von 200 x 50 mm verwendet.

Weitere Einzelheiten der Prüfstation 10 sind in den Figuren 6 bis 9 dargestellt, welche im Folgenden erläutert werden sollen.

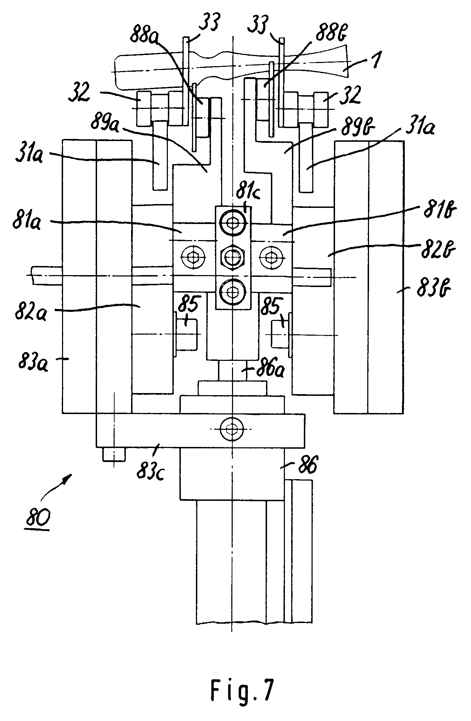

Wie Figur 6 zeigt, weist die Prüfstation 10 ein vertikales Rahmenwerk 14 auf, welches aus einem unteren Ständer 14a, einem daran mit seinen Schenkein angeschraubten Portal 14b und einer mit dem Joch des Portals 14b verschraubten Endplatte 14c besteht. Die Endplatte 14c trägt die als Schlitten 13a ausgebildeten vertikalen Schenkel einer Traverse 13, auf deren horizontalen Führungsschenkeln 13b die Fotodiodenkamera 12 in Richtung des Doppelpfeils 12b horizontal verschiebbar gelagert ist. Der Schlitten 13a reitet teilweise auf den Seitenflächen der Endplatte 14c und läßt sich mittels eines Handgriffes 13c bezüglich der Endplatte 14c vertikal verschieben sowie mittels eines Arretierhebels 13 in jeder vertikalen Stellung gegenüber der Endplatte 14c verriegeln. Auch die Fotodiodenkamera 12 weist zwei gegenüberliegende Arretierhebel 12 c und 12d auf, um eine Verriegelung in jeder beliebigen horizontalen Stellung der Kamera 12 zu ermöglichen. Mit Hilfe der erwähnten vertikalen und horizontalen Verstellmöglichkeiten läßt sich die Fotodiodenkamera 12 exakt auf die Ampulle 1 justieren, welche von dem in den Figuren 7 bis 9 näher dargestellten Ausheber 80 gegen das Reibrad 16 angedrückt wird. Letzteres wird von einem Elektromotor 15 über ein zwischengeschaltetes Getriebe 15a angetrieben. Bei dem erwähnten Prototypen der Prüfstation 10 hatte der Motor 15 bei einer angelegten Gleichspannung von 24 Volt eine Leistung von 15 Watt. Die Abtriebsdrehzahl des Getriebes 15a betrug 100 Umdrehungen pro Minute bei einem maximalen Dauerdrehmoment von 115 N/cm. Der Elektromotor 15 und das Getriebe 15a sind an einem Hilfsrahmen 15b gelagert, welcher über einen Befestigungswinkel 15c am Ständer 14a montiert ist. Der Elektromotor 15 und das Getriebe 15a lassen sich in dem Hilfsrahmen 15b in Richtung ihrer Längsachse verschieben, um das Reibrad 16 exakt aufden zylindrischen Rumpf 2 (Figur 1) der im Ausheber 80 gelagerten Ampulle 1 zu positionieren.

An dem Ständer 14a ist ferner die eine Führungsbahn 31 des Kettenförderers 30 befestigt, dessen zweite, gegenüberliegende Führungsbahn 31 in nicht dargestellter Weise gelagert ist. An der Unterseite der beiden Fühtungsbahnen 31 liegt das Gehäuse der Beleuchtungsguelle 11 bündig an, welche ihrerseits an dem Ständer 14a befestigt ist. Wie bereits erwähnt, betrug bei dem Prototypen der Prüfstation 10 die Leuchtfläche 200 x 50 mm, wobei die größere Länge 200 mm in Achsrichtung der Ampulle 1 verlief.

Auf der Innenseite jeder Führungsbahn 31 ist im Bereich ihres oberen Endes eine rechteckig profilierte Führungsschiene 31a über Stege 31b befestigt, auf welcher die Kettenglieder 32 einer jeweils zugeordneten Förderkette reiten. An der Innenseite jedes Kettengliedes 32 ist ein Lagerplättchen 33 befestigt, deren freies Ende dachförmig abgeschrägt ist, so daß jeweils zwei benachbarte Lagerplättchen 33 eine V-förmige Lagermulde für eine Ampulle 1 bilden. Die vorstehenden Einzelheiten des Kettenförderers 30 ergeben sich in vergrößerter Darstellung auch aus Figur 7.

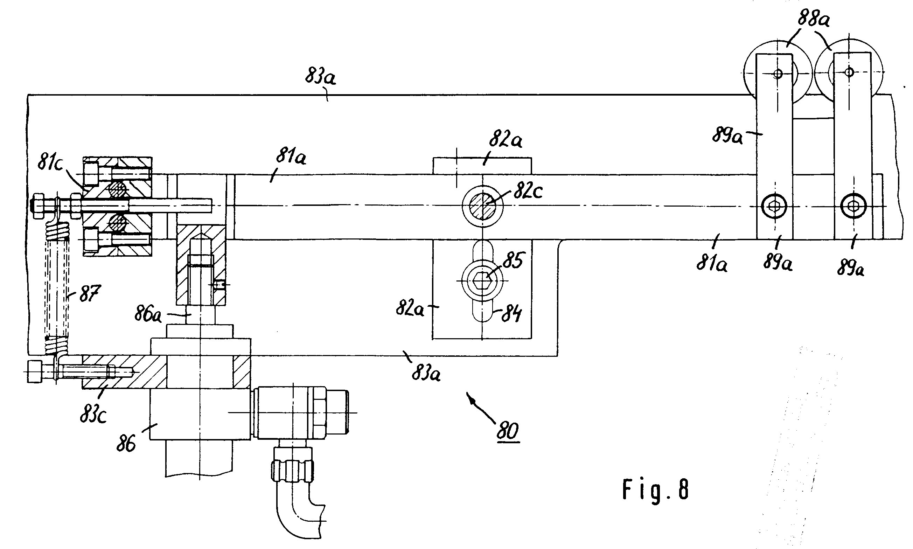

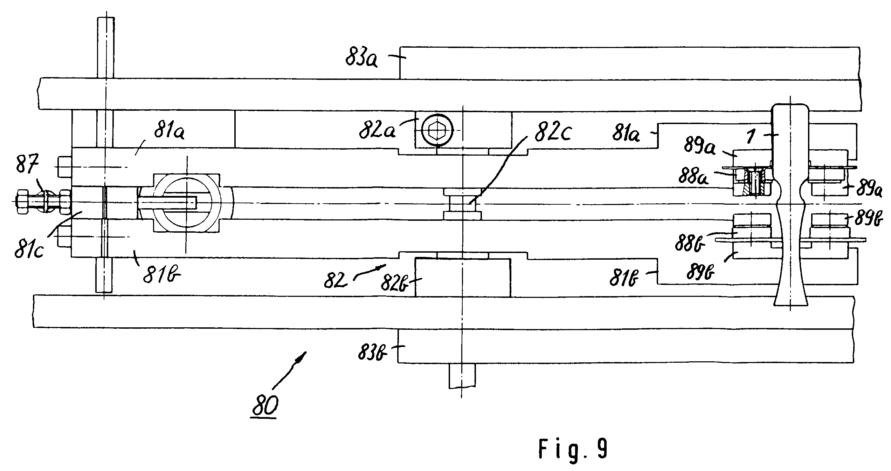

Zum Ausheben der Ampullen 1 aus ihrer V-förmigen Lagermulde des Kettenförderers 30 ist ein bei der Ansicht nach Figur 6 weggelassener Ausheber 80 (Figur 3) vorgesehen, dessen Einzelheiten anhand der Figuren 7 bis 9 erläutert werden sollen. Wie insbesondere aus Figuren 8 und 9 ersichtlich ist, weist der Ausheber 80 zwei parallele Dreharme 81a und 81b auf, welche um ein Drehlager 82 in einer vertikalen Ebene schwenkbar gelagert sind. Das Drehlager 82 weist zwei, die Dreharme 81a und 81b flankierende Lagerböcke 82a und 82b auf, welche die Drehachse 82c tragen. Die Lagerböcke 82a und 82b sind wiederum an Seitenteilen 83a bzw. 83b des Aushebergehäuses vertikal verstellbar befestigt. Hierzu weist jeder Lagerbock 82a bzw. 82b eine Langlochführung 84 auf, durch welche eine Stellschraube 85 hindurchgreift.

Im Bereich des linken Gehäuseendes ist an einer Bodenplatte 83c ein Hydraulikzylinder 86 gelagert, dessen Kolben 86a mit den linken Hebelabschnitten der Dreharme 81a und 81b gelenkig verbunden ist. Der Kolben 86a arbeitet gegen die Wirkung einer Zugfeder 87, welche einerseits mit einem endseitigen Verbindungsstück 81c der Dreharme 81a, 81b und andererseits mit der Bodenplatte 83c verbunden ist. Die Zugfeder 87 spannt die Dreharme 81a, 81b im Gegenuhrzeigersinn vor.

Die Dreharme 81a, 81b tragen im Bereich ihrer rechten Enden (welche in die Prüfstation hineingreifen) jeweils ein Rollenpaar 88a bzw. 88b, welche zwei Lagermulden zur drehbaren Lagerung der zu prüfenden Ampulle 1 bilden. Jedes Rollenpaar 88a, 88b ist an jeweils zwei zugeordneten Lagerböcken 89a bzw, 89b drehbar gelagert, die ihrerseits mit dem jeweils zugeordneten Dreharm 81a bzw. 81b verschraubt sind. Wie aus Figur 7 ersichtlich ist, greifen die Rollenpaare 88a und 88b in den Raum zwischen den Lagerplättchen 33 des Kettenförderers 30, so daß bei einer Schwenkbewegung der Dreharme 81a und 81b im Gegenuhrzeigersinn die in den V-förmigen Lagermulden der Lagerplättchen 33 liegende Ampulle 1 von den beiden Rollenpaaren 88a, 88b erfaßt und vertikal nach oben gehoben wird (ausgehobener Zustand des Aushebers 80). Hierzu wird der Hydraulikzylinder 86 gelüftet, wodurch die Dreharme 81a, 81b unter der Wirkung der Zugfeder 87 im Gegenuhrzeigersinn bewegt werden. Zum Absenken der Rollenpaare 88a, 88b wird der Hydraulikzylinder 86 mit Hydraulikdruck beaufschlagt, wodurch die Dreharme 81a, 81b gegen die Wirkung der Zugfeder 87 im Uhrzeigersinn gedreht werden. Im ausgehobenen Zustand wird, wie schon erwähnt, die Ampulle 1 von jedem Rollenpaar 88a, 88b drehbar gelagert, so daß sich die Ampulle 1 von dem Reibrad 16 (Figur 6) leicht drehen läßt. Dabei erzeugt die Zugfeder 87 den erforderlichen Anpreßdruck zwischen Reibrad 16 und Ampulle 1.

Wie man aus Figur 9 gut erkennt, weisen die rechten Endbereiche der Dreharme 81a, 81b stufenförmige Absätze auf, um einerseits die Lagerböcke 89a, 89b aufnehmen zu können und andererseits den Hindurchtritt des diffusen Lichtes der Beleuchtunquelle 11 durch die Ampulle 1 möglichst wenig zu behindern. Die unvermeidlichen Abschattungen durch die Rollenpaare 88a und 88b wirken sich jedoch aufgrund der Beleuchtung der Ampulle 1 mit diffusem Licht nicht störend auf die Meßergebnisse auf. Dabei ist zu berüücksichtigen, daß der Übergangsbereich 4 jeder OPC-Ampulle (Figur 1), welcher für die Überprüfung der Farbpunktmarkierung 5 und der Sollbruchstelle 5a in der Prüfstation 10 allein von Interesse ist, im Bereich zwischen den Rollenpaaren 88a, 88b liegt (Fig. 9), wodurch der Übergangsbereich 4 der OPC-Ampulle 1 durch die von unten her erfolgende Beleuchtung gut ausgeleuchtet wird.

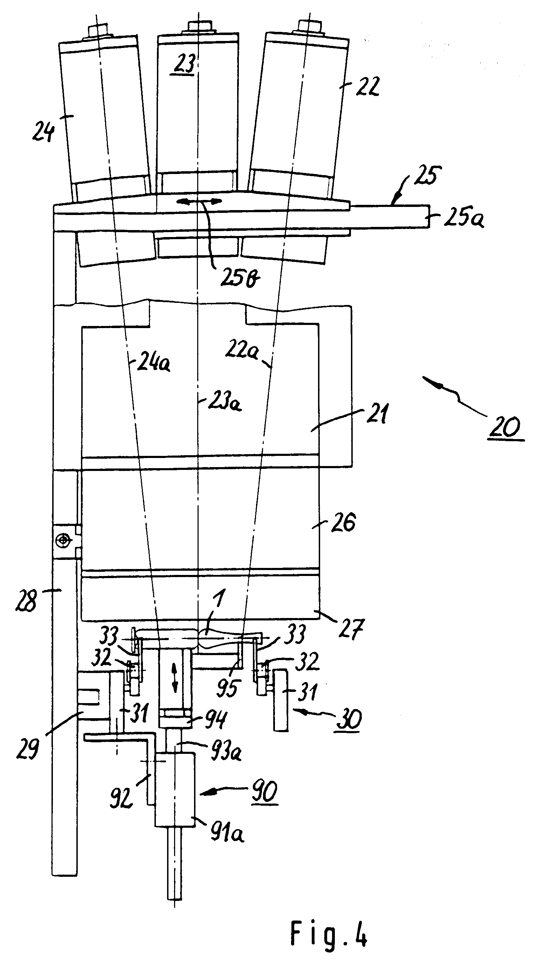

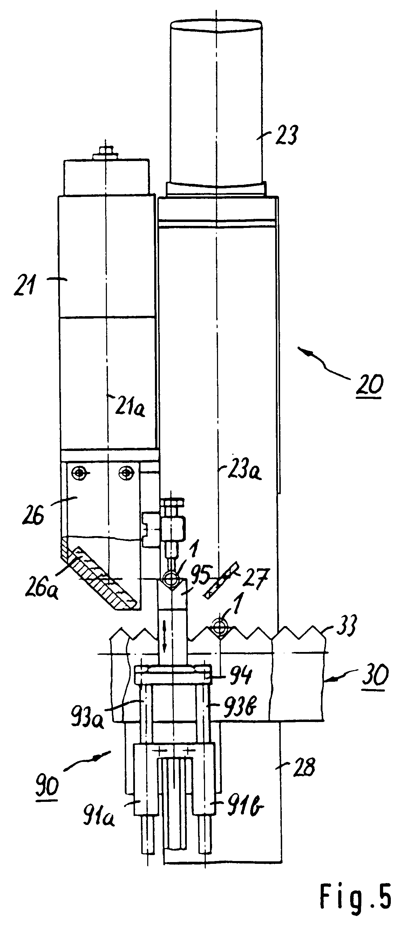

Für eine Überprüfung der gesamten Kontur der Ampulle würden indessen die Bauteile des Aushebers 80 die Beleuchtung der Ampulle 1 von unten her mit der Beleuchtungsquelle 11 zu sehr beeinträchtigen. Aus diesem Grund erfolgt die automatische Konturkontrolle in der opto-elektronischen Prüfstation 20 (Fig. 3), deren bauliche Einzelheiten an Hand der Figuren 4 und 5 im Folgenden erläutert werden sollen. Wie hieraus hervorgeht, weist die Prüfstation 20 ein vertikales Rahmenwerk 28 auf, an dessen oberem Ende die Führungsschenkel 25a einer horizontalen Traverse 25 starr befestigt sind. Auf den Führungschenkeln 25a ist ein aus drei Fotodiodenkameras 22, 23, 24 bestehendes Kamerasystem in Richtung des Doppelpfeils 25b horizontal verschiebbar gelagert. Die drei Fotodiodenkameras 22 bis 24 sind hintereinander derart angeordnet, daß ihre optische Achsen 22a, 23a bzw. 24a in einer gemeinsamen Ebene liegen, welche die Längsachse der zu prüfenden Ampulle 1 schneidet. Die optischen Achsen 22a, 23a und 24a konvergieren in einem Punkt, welcher unterhalb der zu prüfenden Ampulle 1 liegt. Dies bedeutet, daß die optische Achse 23a der mittleren Fotodiodenkamera 23 senkrecht und die optischen Achsen 22a und 24a der beiden äußeren Fotodiodenkameras 22 und 24 unter einem Neigungswinkel Kleiner als 90° zu der Längsachse der zu prüfenden Ampulle 1 verlaufen.

Unterhalb der zu prüfenden Ampulle 1, d.h., in dem Bereich, wo in der Prüfstation 10 die Beleuchtungsquelle 11 angeordnet ist, befindet sich bei der Prüfstation 20 ein Ausheber 90, welcher noch näher erläutert werden soll. Um die Ampulle 1 mit diffusem Licht zu beleuchten, ist achsparallel zu der mittleren Fotodiodenkamera 23 unmittelbar neben ihr eine Beleuchtungsquelle 21 angeordnet, wie aus Figur 5 ersichtlich ist. Das vertikal von oben nach unten gerichtete, diffuse Licht der Beleuchtungsquelle 21 wird über einen 45°-Spiegel 26a auf die zu prüfende Ampulle 1 umgelenkt. Der Umlenkspiegel 26a ist so angeordnet, daß die optische Achse 21a der Beleuchtungsquelle 21 nach erfolgter Umlenkung am Spiegel 26a unter einem Winkel von 90° auf die Längsachse der zu prüfenden Ampulle 1 trifft. Der Umlenkspiegel 26a ist hierzu an einem Spiegelhalter 26 angebracht, welcher an dem vertikalen Rahmenbwerk 28 befestigt ist (Figur 4).

Das von dem Umlenkspiegel 26a auf die Ampulle 1 umgelenkte Licht kann praktisch ungehindert durch die Ampulle 1 hindurchtreten, da sie nur im Bereich ihrer axialen Enden in V-förmigen Lagerkerben zweier vertikaler Schenkel 95 des Aushebers 90 unverdrehbar gelagert ist. Das durch die Ampulle 1 hindurchtretende, Licht trifft auf einen weiteren 45°-Umlenkspiegel 27, welcher so angebracht ist, daß die durch die Längsachse der Ampulle 1 senkrecht hindurchtretende optische Achse 21a der Beleuchtungsquelle 21 exakt in die optische Achse 23a der mittleren Fotodiodenkamera 23 gespiegel wird. Die Halterung des Umlenkspiegels 27 ist in den Figuren 4 und 5 nicht näher gezeigt. Das an dem Umlenkspiegel 27 gegen die Fotodiodenkameras 22, 23, 24 (Figur 4) gespiegelt Durchgangslicht beinhaltet die optischen Informationen über die Kontur der Ampulle 1. Diese Kontur wird in Form von drei sich überlappenden, axialen Abschnitten auf den Fotodiodenmatrizen der drei Fotodiodenkameras 22, 23, 24 vollständig abgebildet. Die Verwendung von drei hintereinander angeordneten Fotodiodenkameras 22, 23, 24 ist erforderlich, da sich mit einer einzigen Fotodiodenkamera nur ein axialer Ausschnitt (beispielsweise des Übergangsbereiches 4 gemäß Figur 1) abbilden läßt, wie dies im Falle der Fotodiodenkamera 12 der Prüfstation 10 der Fall ist.

Der Ausheber 90 weist zwei parallel arbeitende Hydraulikzylinder 91a, 91b (Figur 5) auf, welche über einen Befestigungswinkel 92 (Fig. 4) an der einen Führungsbahn 31 des Kettenförderers 30 befestigt sind. Wie im Falle von Figur 6 ist diese eine Führungsbahn 31 über eine Lasche 29 mit dem vertikalen Rahmenwerk 28 verbunden. Die Lagerung der anderen Führungsbahn 31 ist in Figur 4 nicht dargestellt. Die Kolben 93a, 93b der beiden parallelen Hydraulikzylinder 91a, 91b sind über eine gemeinsame Jochplatte 94 miteinander verbunden, welche die Schenkel 95 trägt. Die Schenkel 95 greifen in den Raum zwischen den Lagerplättchen 33 des Kettenförderers 30 hinein und heben bei dem Aufwärtshub der Hydraulizylinder 91a, 91b die zu prüfende Ampulle 1 aus ihrer Lagerung in den V-förmigen Lagermulden der Lagerplättchen 33 (Figur 5). Der Hub der Hydraulikzylinder 91a, 91b ist so bemessen, daß am Ende der Aushebbewegung die Längsachse der ausgehobenen Ampulle 1 exakt senkrecht von der umgelenkten optischen Achse 21a der Beleuchtungsquelle 21 geschnitten wird, wie dies in Figur 5 veranschaulicht ist.

Bei einem Prototypen der Prüfstation 20 hatte der Meßbereich des aus drei Fotodiodenkameras bestehenden Kamerasystems eine Länge von 105 x 50 mm, wobei die Auflösung in der Länge 0,07 mm und die Auflösung im Durchmesser 0,1 mm betrug. Pro Sekunde wurden 1,7 Ampullem erfaßt. Die Halogen-Beleuchtungsquelle wies bei der Speise-Gleichspannung von 12V eine Leistung von 20W auf, wobei die Leuchtfläche 150 x 40 mm betrug. Der Ausheber hatte einen Hub von 50 mm sowie eine Hubgeschwindigkeit von etwa 200 mm/s bei einer Aushebezeit von maximal 250 ms nach Kettenstop sowie einer Absenkzeit von maximal 200 ms.

Mit Hilfe des erfindungsgemäßen Verfahrens lassen sich medizinische Ampullen von 1 bis 30 ml vollautomatisch und hinsichtlich sämtlicher genormter Maße bzw. Merkmale vermessen. Insbesondere ergeben sich folgende Vorteile:

- Integration des Meßsystems in vorhandene Ampullen-Produktionslinien mit Kettenförderer;
- Durchführung der vollständigen Kontrolle in den Pausen des Produktionstaktes;
- vollautomatische Überprüfung der Sollbruchstellen von OPC-Ampullen;
- vollautomatische Überprüfung der Konturmaße nach DIN 58 377;
- automatische Erkennung von Restsplittern im Ampullenkörper; automatische Sortierung der Schlecht-Ampullen;
- automatische Sortierung nach getrennten Ampullen-Typen ("Spießklassen" gemäß Fig. 2)
- automatische Errechnung der Stichprobengröße mit getrennter Sortierung der Stichprobe;
- Anlage einer Gesamtfehlerstatistik;
- Erstellung eines internen Fehlerprotokolles;
- Erstellung eines für die Abnehmer bestimmten Prüfprotokolles;
- Ausgabe einer statistischen Fehlerverteilung mit Maschinenfähigkeit über die Stichprobe;
- automatischer Programmaufruf über Teiledatei, Kundendatei und Artikel-Nummer;
- getrennter Betrieb der einzelnen Prüfstationen für OPC-Ampullen und automatische Konturkorrektur;
- Schnittstelle zur Anbindung des Meßsystems an übergeordnete Rechnersysteme;
- Ansteuerung von bedienerfreundlichen Überwachungs- und Warneinrichtungen;
- Einbindung der Gesamtanlage in vorhandenes Steuerungskonzept der Produktionslinie, und
- einfaches Kalibrieren und Überprüfen der Anlagenfunktionen.

**Patentansprüche**

1.  Verfahren zum Überprüfen medizinischer Ampullen auf Maßhaltigkeit, bei dem die auf einer Fördereinrichtung in horizontaler Lage gehaltenen Ampullen durch eine Prüfstation taktweise hindurchbewegt werden, **gekennzeichnet durch** folgende Verfahrensschritte:

    a) Jede Ampulle wird während der Transportintervalle für die Überprüfung aus ihrer Lagerung ausgehoben und dabei von einer diffus strahlenden Beleuchtungsquelle senkrecht zu ihrer Längsachse im Durchlicht beleuchtet, wobei gegebenenfalls die zu prüfende Ampulle um ihre Längsachse gedreht wird;

b) das durch jede Ampulle hindurchtretende Licht wird durch die Geometrie- und/oder Transparenzvartationen in seiner Helligkeit moduliert, wobei diese Helligkeitsmodulation eine optische Information über die Meßparameter darstellt;

c) das modulierte Licht wird in den Strahlengang eines mit Fotodioden ausgestatteten Kamerasystems gelenkt;

d) die Fotodioden des Kamerasystems erzeugen eine Abbildung von der Kontur der Ampulle oder - im Falle einer Drehung der geprüften Ampulle um ihre Längsachse - von einer Folge einzelner Oberflächenstreifen der geprüften Ampulle entsprechend einer Abwicklung der Ampullenoberfläche, und

e) die erzeugten Abbildungen werden als elektrische Bildsignale an eine digitale Bildauswerteeinrichtung übertragen und dort anhand ihrer Helligkeitsmodulation dahingehend ausgewertet, daß Meßwerte für die gewünschten Ampullenmaße sowie gegebenfalls für deren Abweichungen von normierten Ampullenmaßen erzeugt werden.

2. Verfahren nach Anspruch 1,zur automatischen Kontrolle von One-Point-Cut-(OPC)-Ampßullen, welche bei der Beleuchtung um ihre Längsachse gedreht werden, **dadurch gekennzeichnet**, daß die Beleuchtungsquelle unterhalb und das Kamerasystem oberhalb der zu prüfenden Ampulle positioniert werden, und daß die optischen Achsen der Beleuchtungs-quelle und des Kamerasystems geradlinig verlaufen und senkrecht zu der Längsachse der zu prüfenden Ampulle positioniert werden.

3. Verfahren nach Anspruch 1 oder 2, **dadurch gekennzeichnet**, daß das aus einer Fotodiodenkamera bestehende Kamerasystem verschoben wird.

4. Verfahren nach Anspruch 2 oder 3, **dadurch gekennzeichnet**, daß die zu prüfende Ampulle zwischen zwei Rollenpaaren eines als Drehhebel arbeitenden Aushebers drehbar gelagert und von einem Reibradantrieb um ihre Längsachse gedreht wird.

5. Verfahren nach Anspruch 1, zur automatischen Kontrolle der Kontur von Ampullen, **dadurch gekennzeichnet**, daß die Beleuchtungsquelle und das Kamerasystem oberhalb der zu prüfenden Ampulle nebeneinandner angeordnet sind, daß das aus der Beleuchtungsquelle austretende Licht um 90° gegen die im Lichtraum zwischen Beleuchtungsquelle und Kamerasystem zur Prüfung positionierte Ampulle umgelenkt wird, und daß das modulierte Licht um 90° in die Aufnahmeoptik des Kamerasystems umgelenkt wird.

6. Verfahren nach Anspruch 5, **dadurch gekennzeichnet**, daß das Kamerasystem aus drei Fotodiodenkameras besteht, deren optische Achsen in eine gemeinsame, durch die Ampullen-Längsachse hindurchtretende Schnittebene gelegt werden, derart, daß die optische Achse der mittleren Fotodiodenkamera zu der Längsachse der zu prüfenden Ampulle senkrecht positioniert wird und daß die optischen Achsen der beiden äußeren Fotodiodenkameras zu der Längsachse der zu prüfenden Ampulle so geneigt werden, daß sich sämtliche optische Achsen des Kamerasystems in einem Punkt unterhalb der Ampulle schneiden.

7. Verfahren nach Anspruch 6, **dadurch gekennzeichnet**, daß der Strahlengang der Beleuchtungsquelle parallel zu der gemeinsamen Schnittebene der optischen Achsen der drei Fotodiodenkameras gelegt wird.

8. Verfahren nach einem der Ansprüche 5 bis 7, **dadurch gekennzeichnet**, daß das Kamerasystem parallel zur Ampullen-Längsachse verschiebbar ist.

9. Verfahren nach einem der Ansprüche 5 bis 8, **dadurch gekennzeichnet**, daß die zu prüfende Ampulle zwischen zwei Schenkeln eines als Hubstempel arbeitenden Aushebers in deren V-förmigen Lagerkerben unverdrehbar gelagert wird.

Fig.1

Spießampulle

Trichterampulle

Aufbrennampulle

(a)

(b)

(c)

Fig.2

*20*

*31*

*10*

*12*

*30*

*1*

*90*

*1*

*11*

Bildsignal

*80*

Bildsignal

Sortiersignal

*70*

*40*

Auswerteeinrichtung

*60*

*50*

*100*

Drucker

Fig.3

Fig.4

Fig.5

Fig. 6

Fig.7

Fig.8

Fig. 9

EP 0 508 548 A2